# EUROPÄISCHE PATENTSCHRIFT

(11) **EP 4 269 941 B1**
(45) Veröffentlichungstag und Bekanntmachung des Hinweises auf die Patenterteilung: **04.06.2025**
(21) Anmeldenummer: 23168238.6
(22) Anmeldetag: 17.04.2023
(51) Int. Cl.: G01C 9/28

(54) **BEFESTIGUNGSVORRICHTUNG FÜR EINEN LIBELLENKÖRPER**
FASTENING DEVICE FOR A VIAL BODY
DISPOSITIF DE FIXATION D'UNE FIOLE DE NIVEAU

(30) Priorität: 19.04.2022 DE 102022109417
(43) Veröffentlichungstag der Anmeldung: 01.11.2023
(73) Patentinhaber: Bayerische Mass-Industrie Arno Keller GmbH, 91217 Hersbruck (DE)
(72) Erfinder: HUBERT,Ralf, 90765 Fürth (DE)
(74) Vertreter: Götz, Gudrun Veronika

(56) Entgegenhaltungen:
- DE-A1- 19 911 798
- DE-A1- 3 432 911
- DE-A1- 3 532 124
- DE-A1- 3 606 774

## Beschreibung

Die Erfindung betrifft eine Vorrichtung zum Befestigen des Libellenkörpers einer Wasserwaage, wobei die Wasserwaage ein Hohlprofil mit mindestens einer an die zu vermessende Oberfläche anzulegenden Messfläche und mindestens eine Außenfläche umfasst, die Befestigungsvorrichtung aufweisend einen den Libellenkörper aufnehmenden Libellenhalter, der in das Hohlprofil der Wasserwaage, insbesondere in eine an der Außenfläche vorgesehene Ausnehmung des Hohlprofils, einschnappbar oder auf sonstige Weise darin befestigbar ist.

Die Erfindung betrifft außerdem eine Wasserwaage mit einer derartigen Befestigungsvorrichtung sowie ein Verfahren zur Herstellung einer solchen Wasserwaage.

Ein Verfahren zur Herstellung einer Wasserwaage ist aus der DE 196 50 683 A1 bekannt. Hierin wird der in einen als Halter fungierenden Libellenrahmen integrierte Libellenkörper zunächst in den Hohlkörper bzw. das Hohlprofil der Wasserwaage eingesetzt. Der Libellenkörper wird im Libellenrahmen justiert und anschließend mittels Laserstrahlschweißen fixiert. Um den Libellenkörper unmittelbar mit dem Libellenrahmen zu verschweißen, können die Materialeigenschaften des aus einem lichtdurchlässigen und nicht reflektierenden Kunststoff, insbesondere aus Polymethylmethakrylat (PMMA) gefertigten Libellenkörpers, ausgenutzt werden. Ausgehend von einer Lichtquelle wird der Laserstrahl in Richtung des Libellenkörpers gelenkt. Der Laserstrahl setzt sich im Libellenkörper fort, bis er auf die angrenzende Oberfläche des Libellenrahmens auftrifft, um den Libellenkörper unmittelbar mit dem Libellenrahmen zu verschweißen. Der Libellenrahmen ist aus einem lichtundurchlässigen und/oder lichtabsorbierenden Kunststoff, insbesondere aus Akryl-Butadien-Styrol (ABS) gefertigt, in welchem sich die Energie des Laserstrahls in Wärme umwandelt. Im Bereich des auftreffenden Laserstrahls entsteht eine Schweißzone innerhalb der der Kunststoff des Libellenrahmens aufgeschmolzen bzw. plastifiziert wird. Nachdem der Kunststoff wieder abgekühlt und erhärtet ist, ist eine feste Verbindung mit dem angrenzenden Libellenkörper entstanden. Nachteilig ist am Laserstrahlschweißen, dass sich der lichtdurchlässige Kunststoff des Libellenkörpers selbst nicht durch die mit dem Laserstrahl eingebrachte Lichtenergie plastifizieren lässt.

Neben dem Laserstrahlschweißen sind auch andere Schweißverfahren zum Fügen von Kunststoffteilen bekannt. Eines davon ist das Ultraschallschweißen, bei dem der Energieeintrag und somit die Schweißverbindung durch hochfrequente mechanische Schwingungen erzeugt wird, die zwischen den einander gegenüberliegenden Oberflächen oder auch Anlage- bzw. Schweißflächen der zu verschweißenden Kunststoffteile zu Reibung und infolgedessen zur Erwärmung des Materials führen. Beim Ultraschallschweißen wird mit Hilfe eines Generators ein Wechselstrom erzeugt, der mit einem Konverter in mechanische Ultraschallschwingungen umgewandelt wird. Die erzeugten Schwingungen werden an die sogenannte Sonotrode weitergegeben, und über deren Arbeitsfläche unter Druck auf die zu verbindenden Kunststoffteile übertragen. Beim Ultraschallschweißen von Kunststoffen werden die Schwingungen vertikal zu den Schweißflächen der Kunststoffteile eingeleitet, die Arbeitsfläche der Sonotrode ist also parallel dazu ausgerichtet, die Druckkraft wirkt vertikal. Gegenüber dem Laserschweißen hat das Ultraschallschweißen den Vorteil, dass die Schweißflächen beider zu verschweißender Kunststoffteile erwärmt, plastifiziert und aufgeschmolzen werden, es entsteht eine nicht lösbare, stoffschlüssige Verbindung.

Eine Wasserwaage, deren Libellenkörper ebenfalls unmittelbar mit dem Libellenrahmen, hier als Libellenträger bezeichnet, ultraschallverschweißt ist, ist aus der DE 36 06 774 A1 bekannt. Zum Verschweißen des Libellenkörpers mit dem Libellenträger wird zunächst der Libellenträger mittels federnder Spreiznocken in das metallische Hohlprofil der Wasserwaage eingeschnappt. Der Libellenkörper wird anschließend in den als Hohlkörper gestalteten Libellenträger eingesetzt und darin justiert. An seinen beiden Stirnseiten weist der Libellenkörper jeweils eine ebene Anlagefläche auf, die in Einbaustellung, d. h. wenn Libellenkörper und Libellenträger bestimmungsgemäß im Hohlprofil der Wasserwaage positioniert sind, an jeweiligen, komplementär gegenüberliegenden Anlageflächen des Libellenträgers anliegen. Um die zum Ultraschallschweißen erzeugten Schwingungen vertikal zu den Anlageflächen einzubringen, wird die Sonotrode durch das Hohlprofil der Wasserwaage, in welchem der Libellenträger samt Libellenkörper in der Einbaustellung sitzt, geführt, sodass die Arbeitsfläche der Sonotrode parallel zu den Anlageflächen ausgerichtet ist und die mechanischen Schwingungen mittels einer vertikal wirkenden Druckkraft an die Anlageflächen übertragen werden können. Damit der Libellenkörper nicht aus der bereits justierten Stellung ausgelenkt wird, und um Spannungen im Material zu reduzieren, ist es erforderlich, die jeweiligen Anlageflächen an den beiden Stirnseiten des Libellenkörpers zeitgleich miteinander zu verschweißen. Hierzu ist der gleichzeitige Einsatz zweier Sonotroden mit jeweiligem Generator notwendig, wodurch sich der Energiebedarf und folglich die Kosten des Verfahrens deutlich erhöhen. Nachteilig ist außerdem, dass je länger die Wasserwaage bzw. deren Hohlprofil ist, auch die Länge der Sonotrode höher gewählt werden muss, damit die durch das Hohlprofil geführte Arbeitsfläche möglichst direkt auf die zu verschweißenden Anlageflächen einwirkt.

Aus der Patentschrift DE 35 46 816 C2 ist ein Verfahren zum Verschweißen des Libellenkörpers einer Wasserwaage mit einem Libellenhalter bekannt, bei dem es nicht erforderlich ist, die Sonotroden in das Hohlprofil der Wasserwaage einzuführen. Dies wird dadurch erreicht, dass der Libellenhalter die Sichtöffnung des Hohlprofiles durchragende Zungen an zwei gegenüberliegenden Seiten des Libellenkörpers aufweist, an denen die Schweißpunkte liegen. Nachteilig ist bei dieser Ausführungsform, dass der Libellenhalter und der Libellenkörper auch nach der Fixierung bzw. nach der Montage der Wasserwaage aus deren Stirnseite herausragen, wodurch die Libelle anfällig für Beschädigungen ist. Darüber hinaus ist das beschriebene Verfahren auch lediglich zur Montage von Kopf- bzw. Vertikallibellen geeignet.

Es ist die Aufgabe der vorliegenden Erfindung, die Nachteile aus dem Stand der Technik zu eliminieren und insbesondere eine Vorrichtung zum Befestigen des Libellenkörpers im Hohlprofil einer Wasserwaage bereitzustellen, die eine zeit- und energieeffiziente und damit kostengünstige Herstellung einer Wasserwaage ermöglicht.

Die Aufgabe wird gelöst durch eine Vorrichtung zum Befestigen des Libellenkörpers einer Wasserwaage gemäß Anspruch 1, durch eine Wasserwaage gemäß Anspruch 8 sowie ein Verfahren zur Herstellung einer Wasserwaage gemäß Anspruch 9.

Eine erfindungsgemäße Befestigungsvorrichtung der eingangs näher beschriebenen Art kennzeichnet sich durch als separate Bauteile ausgebildete Befestigungskeile, die in einer Einbaustellung derart zwischen dem Libellenkörper und dem Libellenhalter angeordnet sind, dass der Libellenkörper mit den Befestigungskeilen und/oder die Befestigungskeile mit dem Libellenhalter ultraschallverschweißbar sind

Erfindungsgemäß soll also, anders als dies aus dem Stand der Technik bekannt ist, nicht der Libellenkörper direkt bzw. unmittelbar mit dem Libellenhalter verschweißt werden, sondern indirekt bzw. mittelbar über dazwischen angeordnete Befestigungskeile. Die Befestigungskeile sind als separate Bauteile ausgeführt und mit dem Libellenhalter verschweißbar. Die jeweiligen Schweißverbindungen können dann zwischen den Befestigungskeilen und dem Libellenkörper und/oder den Befestigungskeilen und dem Libellenhalter mittels Ultraschallschweißen erzeugt werden. Die Befestigungskeile sind hierzu in der Einbaustellung vorzugsweise längs- bzw. stirnseitig zwischen dem Libellenkörper und dem Libellenhalter angeordnet.

Durch die Verwendung von Befestigungskeilen als zusätzliche Schweißpartner ist es nicht länger erforderlich, die Arbeitsfläche der Sonotrode durch das Hohlprofil der Wasserwaage hindurch an die zu verschweißenden Flächen heranzuführen. Stattdessen kann die Sonotrode von außen auf die Befestigungskeile, die insbesondere einen Teil der Außenfläche der Wasserwaage bilden, einwirken bzw. wird die Arbeitsfläche mit den Befestigungskeilen, insbesondere der Außenfläche der Wasserwaage in berührenden Kontakt gebracht. Dies hat zum einen den Vorteil, dass die Länge der Sonotrode unabhängig von der Länge des Hohlprofils der Wasserwaage ist, andererseits können zwei Schweißstellen gleichzeitig gefügt werden, ohne dass ein zweiter Generator erforderlich wäre.

Vorteilhafte Ausführungsformen sind in den Unteransprüchen beansprucht und werden nachfolgend näher erläutert.

So weisen nach einer vorteilhaften Ausführung der Erfindung der Libellenkörper und der Libellenhalter jeweilige, in der Einbaustellung einander gegenüberliegende Anlageflächen auf. Die Befestigungskeile sind in der Einbaustellung zwischen den einander gegenüberliegenden Anlageflächen angeordnet. Vorteilhafterweise befinden sich die Anlageflächen des Libellenkörpers an dessen Stirnseiten und liegen komplementär dazu angeordneten Anlageflächen des Libellenhalters gegenüber. Die Befestigungsvorrichtung umfasst vorzugsweise genau zwei Befestigungskeile, wobei in der Einbaustellung jeweils ein Befestigungskeil an einer Stirnseite des Libellenkörpers, zwischen dessen Anlagefläche und der gegenüberliegenden Anlageflächen des Libellenhalters platziert ist.

In Weiterbildung dieser Erfindungsausführung weisen die Befestigungskeile den einander gegenüberliegenden Anlageflächen entsprechende Schweißflächen auf, die in der Einbaustellung an den jeweiligen Anlageflächen anliegen und so mit diesen ultraschallverschweißbar sind. Hierbei kann es vorteilhaft sein, dass ein Befestigungskeil beidseitig mit jeweils einer Schweißfläche ausgebildet versehen ist, sodass in der Einbaustellung, also wenn der Befestigungskeil zwischen Libellenkörper und Libellenhalter angeordnet ist, eine der Schweißflächen an einer Anlagefläche des Libellenkörpers anliegt und die andere Schweißfläche an einer Anlagefläche des Libellenhalters.

Um präzise Schweißpunkte oder -nähte an den miteinander zu verschweißenden Flächen zu definieren, können die Befestigungskeile in einer besonders vorteilhaften Weiterbildung mit jeweilige Schweißzonen zwischen dem Libellenkörper und den Befestigungskeilen und/oder zwischen dem Libellenhalter und den Befestigungskeilen definierenden, Richtungsgebern versehen sein. Richtungsgeber, auch als Energierichtungsgeber bezeichnet, sind im Zusammenhang mit Ultraschallschweißen grundsätzlich aus dem Stand der Technik bekannt. In der Regel sind Richtungsgeber als entlang der Schweißflächen eines ersten Bauteils angeformte, erhabene Materialnasen ausgebildet, die den Ort des Energieeintrags festlegen und so eine definierte Kontakt- oder Schweißzone mit der ebenen Anlagefläche eines zweiten Bauteils ausbilden. Gemäß der beschriebenen Weiterbildung der Erfindung können bspw. jeweils zwei, in der Form eines dreieckigen Prismas gestaltete Richtungsgeber längs, entlang einer Schweißfläche eines Befestigungskeils angeformt sein. In der Einbaustellung definieren die Richtungsgeber dann präzise Schweißzonen zwischen dem Libellenkörper und den Befestigungskeilen und/oder zwischen den Befestigungskeilen und dem Libellenhalter.

Ferner sieht ein vorteilhaftes Ausführungsbeispiel der Erfindung vor, dass die Befestigungsvorrichtung mindestens eine Deckfläche aufweist, die vertikal zu in der Einbaustellung einander gegenüberliegenden Anlageflächen des Libellenkörpers und des Libellenhalters und/oder vertikal zu den Schweißflächen der Befestigungskeile ausgerichtet und zur Anlage an die Arbeitsfläche einer Sonotrode eines Ultraschallschweißgerätes eben ausgebildet ist.

Gemäß diesem Ausführungsbeispiel kann die Arbeitsfläche der Sonotrode parallel an die eben ausgebildete Deckfläche der Befestigungsvorrichtung angelegt werden, um einen optimalen Energieeintrag in die Befestigungskeile hinein und hin zu deren Schweißflächen zu ermöglichen. Die mittels der Sonotrode ausgeübte Druckkraft wirkt in dieser Konstellation ausgehend von der Außenfläche des Hohlprofils der Wasserwaage, parallel zu den jeweiligen Anlageflächen des Libellenkörpers bzw. des Libellenhalters und den Schweißflächen der Befestigungskeile.

Besonders vorteilhaft ist die Deckfläche integral an die Befestigungskeile angeformt bzw. weist jeder Befestigungskeil eine vertikal zu dessen Schweißflächen verlaufende und einstückig verbundene Deckfläche auf.

Damit die von der Arbeitsfläche einer Sonotrode vertikal auf die Deckfläche einwirkende Druckkraft optimal an die Schweißflächen der Befestigungskeile übertragen bzw. in deren Richtung umgelenkt wird, sind nach einer beispielhaften Erfindungsausgestaltung die Befestigungskeile keilartig, mit von der Außenfläche des Hohlprofils der Wasserwaage und/oder der Deckfläche der Befestigungsvorrichtung in Richtung des Inneren der Wasserwaage abnehmender Materialstärke der Schweißflächen ausgebildet. Durch die keilförmige Ausgestaltung lassen sich die Befestigungskeile leichter in ihre bestimmungsgemäße Position, zwischen den einander gegenüberliegenden Anlageflächen des Libellenkörpers sowie des Libellenhalters einbringen. Gleichzeitig wird über die Befestigungskeile eine Druckkraft auf die Anlageflächen ausgeübt, wodurch der Libellenkörper im Libellenhalter sowie der Libellenhalter im Hohlprofil der Wasserwaage (vor)fixiert werden.

Alternativ oder optional ist es auch denkbar, entlang der Schweißflächen der Befestigungskeile verlaufende Richtungsgeber mit von der Deckfläche ausgehend abnehmender Materialstärke auszubilden und auf diese Weise eine keilförmige Ausgestaltung der Befestigungskeile zu realisieren.

Schließlich ist nach einer Erfindungsvariante auch denkbar, dass die Anlageflächen des Libellenhalters an federnd gelagerten Flügelelementen ausgebildet sind, welche Flügelelemente in der Einbaustellung mittels der Befestigungskeile in das Hohlprofil der Wasserwaage einschnappend fixierbar sind. Die Fixierung kann hierbei insbesondere durch eine keilförmige Ausgestaltung der Befestigungskeile und eine entsprechend auf die Flügelelemente einwirkende Druckkraft erzielt werden. Indem die bspw. keilförmig ausgebildeten Befestigungskeile zwischen den Anlageflächen der Flügelelemente des Libellenkörpers und den Anlageflächen des Libellenhalters mittels Ultraschallschweißen gefügt werden, wird aufgrund der Keilform eine Druckkraft auf die angrenzenden Anlageflächen ausgeübt, wodurch die in das Hohlprofil der Wasserwaage eingeschnappten Flügelelemente zusätzlich fixiert oder "verkeilt" werden können. Durch das Verbinden von Libellenkörper und - halter über bspw. zwei Befestigungskeile mittels Ultraschallverschweißens entsteht eine in der justierten Stellung fixierte und kompakte Einheit aus den vier Bauteilen: Libellenkörper, Libellenhalter und zwei Befestigungskeile. Gleichzeitig fungieren die Befestigungskeile als Sicherung für die in das Hohlprofil eingeschnappten Flügelelemente, indem eine jeweilige Schweißverbindung zwischen einem Flügelelement und dem zugehörigen Befestigungskeil ausgebildet wird.

Die eingangs gestellte Erfindungsaufgabe wird daher auch durch eine Wasserwaage mit einem Hohlprofil, einem Libellenkörper und einer Befestigungsvorrichtung mit einem Libellenhalter und Befestigungskeilen nach einer der zuvor beschriebenen Ausführungen gelöst. Erfindungsgemäß ist bei einer solchen Wasserwaage der Libellenhalter in das Hohlprofil eingeschnappt oder auf sonstige Weise darin befestigt, insbesondere verklebt oder verschraubt. Die Befestigungskeile sind zwischen dem Libellenkörper und dem Libellenhalter angeordnet, wobei der Libellenkörper mit den Befestigungskeilen und/oder die Befestigungskeile mit dem Libellenhalter ultraschallverschweißt sind.

Schließlich stellt auch ein Verfahren zur Herstellung einer Wasserwaage, die ein Hohlprofil mit mindestens einer an die zu vermessende Oberfläche anzulegenden Messfläche und mindestens einer Außenfläche, einen Libellenkörper sowie einen Libellenhalter aufweist, eine mögliche Lösung der eingangs gestellten Erfindungsaufgabe dar. Bei dem Herstellungsverfahren wird in einem vorzugsweise ersten Verfahrensschritt der Libellenhalter in das Hohlprofil der Wasserwaage, insbesondere in eine an einer Außenfläche des Hohlprofils vorgesehenen Ausnehmung eingeschnappt oder auf sonstige Weise darin befestigt, z. B. verschraubt oder verklebt. In einem vorzugsweise zweiten Verfahrensschritt wird der Libellenkörper in den Libellenhalter eingesetzt und darin justiert. Zwischen dem Libellenkörper und dem Libellenhalter werden, vorzugsweise in einem dritten Verfahrensschritt, als separate Bauteile ausgebildete Befestigungskeile platziert und anschließend, vorzugsweise in einem vierten Verfahrensschritt, der Libellenkörper mit den Befestigungskeilen und/oder die Befestigungskeile mit dem Libellenhalter ultraschallverschweißt.

Nach einer beispielhaften Variante dieses Herstellungsverfahrens werden jeweilige, einander gegenüberliegende Anlageflächen des Libellenkörpers und/oder des Libellenhalters mit komplementär dazu ausgerichteten Schweißflächen der dazwischenliegend platzierten Befestigungskeile ultraschallverschweißt. Die Arbeitsfläche einer Sonotrode eines Ultraschallschweißgerätes liegt hierzu parallel an einer Außenfläche des Hohlprofils und/oder parallel an einer Deckfläche der Befestigungskeile an, welche Außenfläche und/oder Deckfläche wiederum vertikal zu den einander gegenüberliegende Anlageflächen und den Schweißflächen verläuft. Entgegen den aus dem Stand der Technik bekannten Verfahren zum Ultraschallschweißen von Kunststoffen werden die Schwingungen von der Sonotrode aus also nicht vertikal zu den miteinander zu verschweißenden Flächen (Anlageflächen des Libellenkörpers bzw. des Libellenhalters mit den Schweißflächen der Befestigungskeile), sondern parallel zu deren Ausrichtung eingebracht. Hierdurch wird die Zugänglichkeit für die Sonotrode erheblich erhöht, da es nicht länger erforderlich ist, diese durch das Hohlprofil der Wasserwaage hindurchzuführen und so das Herstellungsverfahren vereinfacht.

Weitere Einzelheiten, Merkmale, Merkmals(unter)kombinationen, Vorteile und Wirkungen auf Basis der Erfindung ergeben sich aus der nachfolgenden Beschreibung bevorzugter Ausführungsbeispiel der Erfindung und den Zeichnungen. Diese zeigen in
- Fig. 1: eine perspektivische Darstellung einer Wasserwaage, in deren Hohlprofil eine erste beispielhafte Ausführungsform einer erfindungsgemäßen Befestigungsvorrichtung eingeschnappt ist,
- Fig. 2: die Wasserwaage mit der ersten beispielhaften Ausführungsform der erfindungsgemäßen Befestigungsvorrichtung aus Figur 1 in einer perspektivische Explosionsdarstellung,
- Fig. 3: eine perspektivische Darstellung einer zweiten beispielhaften Ausführungsform der erfindungsgemäßen Befestigungsvorrichtung,
- Fig. 4: eine perspektivische Frontansicht der zweiten beispielhaften Ausführungsform der erfindungsgemäßen Befestigungsvorrichtung gemäß Figur 3 mit einem eingesetzten Libellenkörper.

Die Figuren sind lediglich beispielhafter Natur und dienen nur dem Verständnis der Erfindung. Die gleichen Elemente sind mit denselben Bezugszeichen versehen.

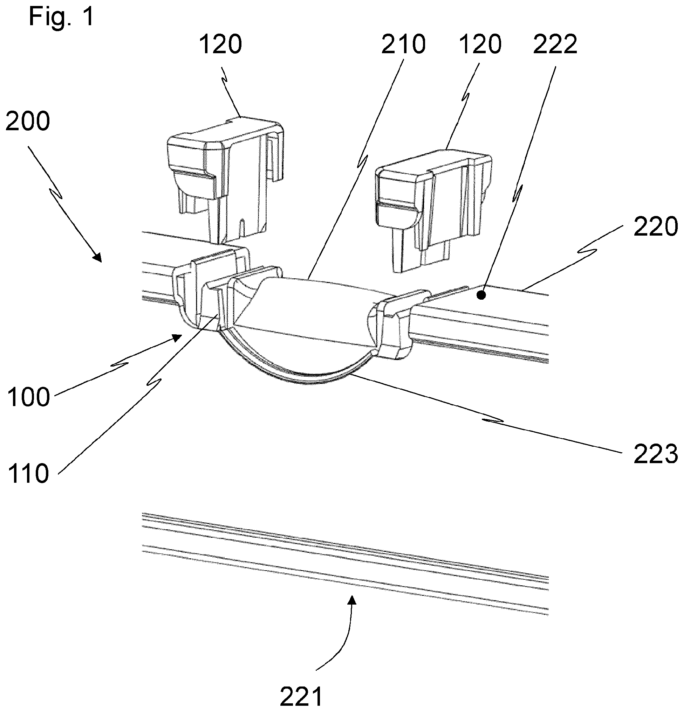

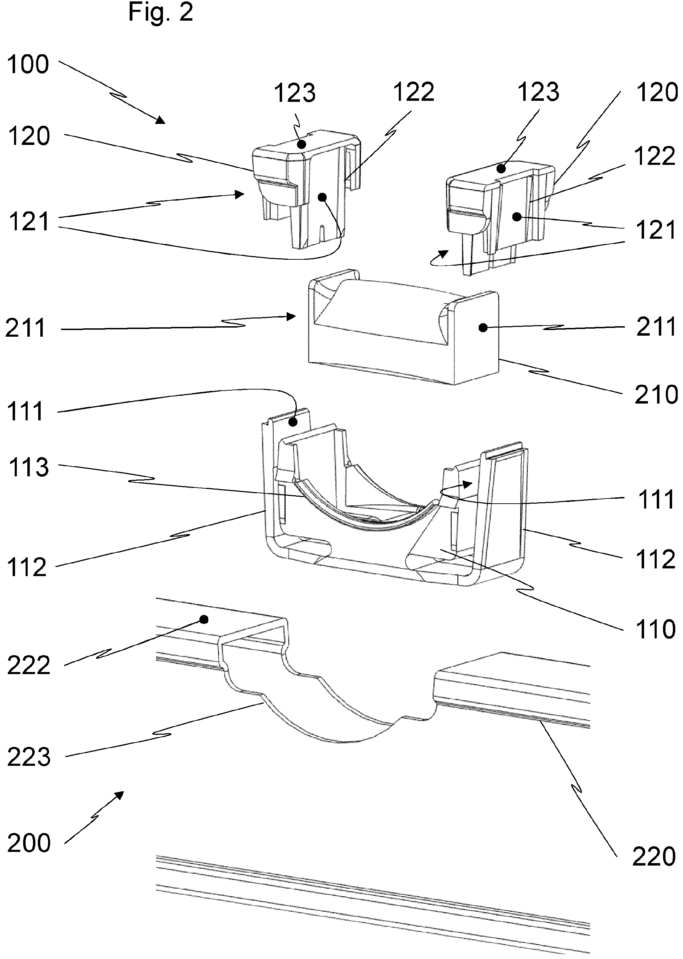

Der Figur 1 kann eine perspektivische Darstellung einer Wasserwaage 200 mit einem aus einem Leichtmetall, insbesondere Aluminium gefertigten Hohlprofil 220 entnommen werden. Das Hohlprofil 220 weist einen im Wesentlichen rechteckigen Querschnitt auf und bildet die Form eines langgezogenen Quaders. Die beiden Stirnflächen des Hohlprofils 220 sind in der Darstellung abgeschnitten und daher nicht zu sehen. Mindestens eine der übrigen Außenflächen 222 ist als Messfläche 221 ausgebildet und zur Anlage an die mit der Wasserwaage zu vermessende Oberfläche vorgesehen. Ausgehend von der der Messfläche 221 gegenüberliegenden Außenfläche 222 ist eine kreisbogenförmige Ausnehmung 223 aus dem Hohlprofil 220 der Wasserwaage 200 ausgeschnitten, die zur Aufnahme der Befestigungsvorrichtung 100 samt Libellenkörper 210 dient. In der hier gezeigten Darstellung ist der Libellenhalter 110 der Befestigungsvorrichtung 100 in einer in die Ausnehmung 223 eingeschnappten Einbaustellung dargestellt. Auch der Libellenkörper 210 der Wasserwaage 200 ist in der Einbaustellung gezeigt, d. h. im Innern des als Hohlkörper 113 (s. Figur 2) ausgebildeten Libellenhalters 110 platziert. Zur Befestigungsvorrichtung 100 gehören außerdem zwei als separate Bauteile ausgeführte Befestigungskeile 120, die ebenso wie der Libellenhalter 110 aus Kunststoffspritzguss gefertigt sind. Vorzugsweise bestehen der Libellenhalter 110 und die Befestigungskeile 120 jeweils aus einem plastifizierbaren Kunststoff, beispielsweise aus Akryl-Butadien-Styrol (ABS). In der Einbaustellung werden die Befestigungskeile 120 jeweils stirnseitig zwischen dem Libellenkörper 210 und dem Libellenhalter 110 positioniert.

Die Figur 2 zeigt die Wasserwaage 200 mit der ersten beispielhaften Ausführungsform der erfindungsgemäßen Befestigungsvorrichtung 100 aus Figur 1 in einer perspektivische Explosionsdarstellung. Gut zu erkennen ist hier die im Wesentlichen kreisbogenförmige Ausnehmung 223 im Hohlprofil 220, in die der Libellenhalter 110 einschnappbar ist. Hierzu weist der Libellenhalter 110 zwei stirnseitig angeordnete und als integrale Bestandteile mit dessen Hohlkörper 113 ausgeführte Flügelelemente 112 auf. Die Flügelelemente 112 sind federnd gelagert, sodass diese während des Einführens des Libellenhalters 110 in das Hohlprofil 220 ausgelenkt werden, um anschließend in ihre ursprüngliche Stellung zurückzukehren. Die nach innen gewandten Seiten der Flügelelemente 112 des ansonsten als Hohlkörper 113 ausgebildeten Libellenhalters 110 weisen jeweils eine ebene Anlagefläche 111 auf, die in der Einbaustellung einer jeweiligen äußeren, ebenen Anlagefläche 211 des Libellenkörpers 210 gegenüberliegt.

**In** der Einbaustellung ist außerdem jeweils ein Befestigungskeil 120 stirn- bzw. längsseitig zwischen dem Libellenkörper 210 und dem Libellenhalter 110 angeordnet, sodass an jeder der Anlageflächen 211, 111 des Libellenkörpers 210 und des Libellenhalters 110 eine komplementär ausgebildete Schweißfläche 121 der Befestigungskeile 120 berührend anliegt. **In** der hier gezeigten, ersten beispielhaften Ausführungsform, in der die Anlageflächen 111 des Libellenhalters 110 an den am Hohlkörper 113 stirnseitig angeformten Flügelelementen 112 ausgebildet sind, sind die Befestigungskeile 120 mit einer entsprechenden spaltartigen Ausnehmung zur Aufnahme der Stirnseiten des Hohlkörpers 113 versehen. Entlang der Schweißflächen 121 verlaufend sind jeweils zwei Richtungsgeber 122, auch als Energierichtungsgeber bezeichnet, an die Befestigungskeile 120 integral angeformt. Vertikal zu den Schweißflächen 121 und den Anlageflächen 211, 111 ausgerichtet, weisen die Befestigungskeile 120 jeweils eine eben ausgebildete Deckfläche 123 auf, die in der Einbaustellung mit der Außenfläche 222 der Wasserwaage 200 fluchtet.

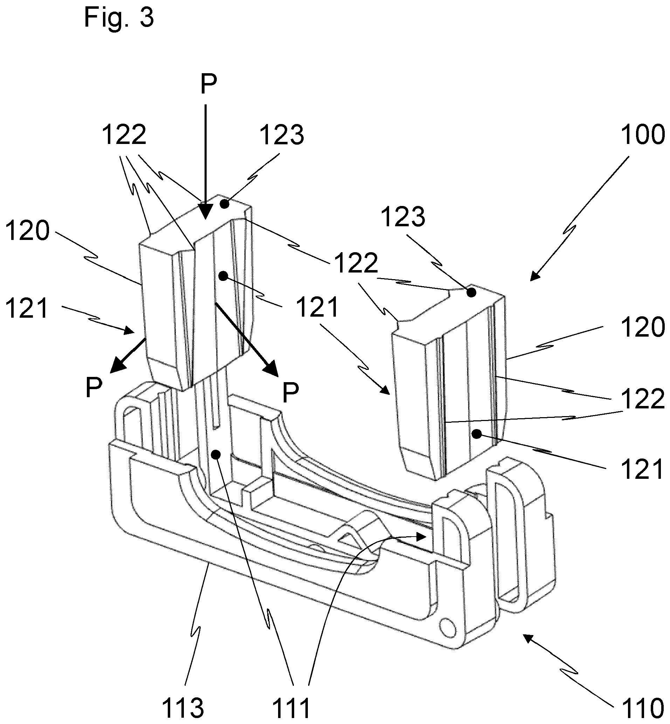

Eine perspektivische Darstellung einer zweiten beispielhaften Ausführungsform der erfindungsgemäßen Befestigungsvorrichtung 100 ist der Figur 3 zu entnehmen. Die hier gezeigte Befestigungsvorrichtung 100 entspricht grundsätzlich der ersten beispielhaften Ausführungsform. Davon abweichend umfasst der Libellenhalter 110 zwei separate, identische Bauteilhälften, die gemeinsam den quaderförmigen Hohlkörper 113 zur Aufnahme eines hier nicht gezeigten, ebenfalls quaderförmigen Libellenkörpers einer Wasserwaage bilden. Ferner ist der Libellenhalter 110 ohne die Flügelelemente 112 (s. Figur 2) ausgebildet, weshalb auch die Anlageflächen 111 des Libellenkörpers 110 an den innenliegenden Stirnseiten des Hohlkörpers 113 ausgebildet sind. Der Libellenhalter 110 kann in das Hohlprofil einer hier nicht gezeigten Wasserwaage eingeschraubt, eingeklebt oder auf sonstige, aus dem Stand der Technik bekannte Weise darin befestigt werden. **In** einer beispielhaften Variante wird der Libellenhalter 110 schräg in die Ausnehmung des Hohlprofils der Wasserwaage eingeschoben, sodass dessen längsseitige Enden unterhalb des Hohlprofils angeordnet ("verklemmt") sind und so innerhalb der Ausnehmung gehalten werden. Um das Einschieben zu erleichtern können die längsseitigen Enden mit einer bspw. viertelkreisförmigen Verrundung ausgebildet sein.

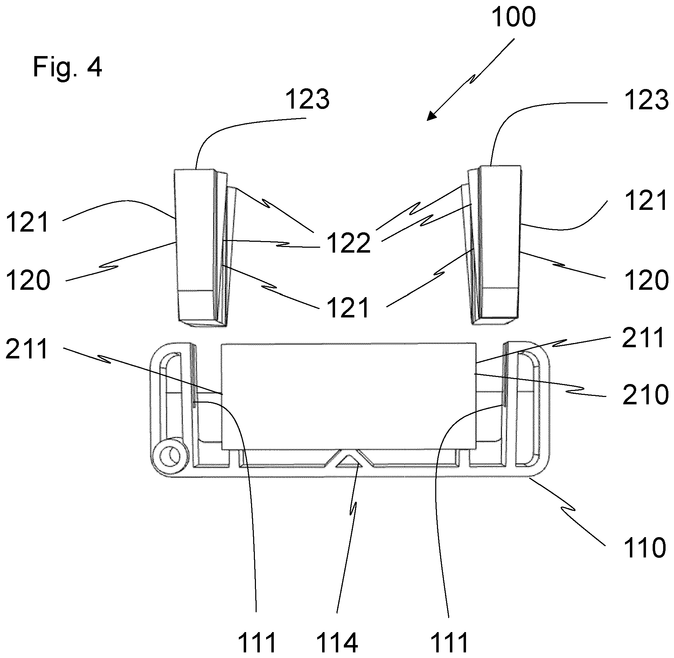

Zur Befestigung des Libellenkörpers 210 (s. Figur 4) werden dessen Anlageflächen 211 und die Anlageflächen 111 des Libellenhalters 110 jeweils mit den in der Einbaustellung komplementär gegenüberliegend angeordneten Schweißflächen 121 der Befestigungskeile 120 ultraschallverschweißt. Der hierzu erforderliche Energieeintrag wird über die Arbeitsfläche einer Sonotrode eines Ultraschallschweißgeräts eingebracht, die parallel an die vertikal zu den Schweißflächen 121 ausgerichteten Deckflächen 123 der Befestigungskeile 120 angelegt wird. Die durch die Sonotrode auf die Deckflächen 123 ausgeübte Druckkraft P wird mittels der Befestigungskeile 120, insbesondere mittels der Richtungsgeber 122 (schräg) in Richtung der jeweiligen Anlageflächen 211, 111 umgelenkt. Hierzu sind die Richtungsgeber 122 mit einer ausgehend von der Deckfläche 123 abnehmenden Materialstärke ausgeführt. In der hier gezeigten Perspektive außerdem gut zu erkennen, sind die Richtungsgeber 122 integral an die Befestigungskeile 120 angeformt und weisen jeweils einen dreieckigen Querschnitt auf bzw. sind in der Form eines dreieckigen Prismas ausgebildet. Die Dreiecksspitze legt den konkreten Ort des zur Materialplastifizierung erforderlichen Energieeintrags fest und dient der Definition einer geradlinigen Schweißzone oder einer Schweißnaht. Innerhalb dieser Schweißzonen werden die aneinandergrenzenden Anlage- bzw. Schweißflächen 211, 111, 121 plastifiziert und stoffschlüssig gefügt. Durch die Definition konkreter Schweißzonen können während des Ultraschallschweißens im Material auftretende Spannungen reduziert werden.

Schließlich ist in der Figur 4 eine perspektivische Frontansicht der zweiten beispielhaften Ausführungsform der erfindungsgemäßen Befestigungsvorrichtung 100 gemäß Figur 3 mit einem eingesetzten Libellenkörper 210 dargestellt. In der Darstellung ist eine der beiden Bauteilhälften des Libellenhalters 110 der Befestigungsvorrichtung 100 ausgeblendet. Zu erkennen ist so, dass im Innern des Libellenhalters 110 ein Sitz 114 vorgesehen ist, der es erlaubt den Libellenkörper 210 mittels einer nicht gezeigten Justagevorrichtung durch eine wiegeartige Bewegung in Bezug auf die Messfläche 221 der Wasserwaage 200 (s. Figur 1) zu justieren. Der Libellenkörper 210 wird durch die Justagevorrichtung in der justierten Stellung gehalten, während die Befestigungskeile 120 in ihre vorgegebene Position zwischen dem Libellenkörper 210 und den stirnseitig gegenüberliegenden Anlageflächen 111 des Libellenhalters 110 eingeschoben werden. Durch die keilförmige Ausgestaltung der Befestigungskeile 120, insbesondere der Richtungsgeber 122, deren Materialstärke ausgehend von den Deckflächen 123 in Richtung der Messfläche 221 der Wasserwaage 200 hin abnimmt, erfolgt eine Vorfixierung des Libellenkörpers 210 in der gewünschten Stellung, bevor anschließend die Schweißflächen 121 der Befestigungskeile 120 mit den jeweiligen Anlageflächen 211, 111 des Libellenkörpers 210 bzw. des Libellenhalters 110 ultraschallverschweißt werden.

### Bezugszeichenliste

- 100: Vorrichtung zum Befestigen/Befestigungsvorrichtung

- 110: Libellenhalter
- 111: Anlagefläche des Libellenhalters
- 112: Flügelelemente
- 113: Hohlkörper
- 114: Sitz

- 120: Befestigungskeil
- 121: Schweißfläche
- 122: Richtungsgeber
- 123: Deckfläche

- 200: Wasserwaage

- 210: Libellenkörper
- 211: Anlagefläche des Libellenkörpers

- 220: Hohlprofil
- 221: Messfläche
- 222: Außenfläche
- 223: Ausnehmung

- P: Druckkraft

## Patentansprüche

1. Vorrichtung (100) zum Befestigen des Libellenkörpers (210) einer Wasserwaage (200), wobei die Wasserwaage (200) ein Hohlprofil (220) mit mindestens einer an die zu vermessende Oberfläche anzulegenden Messfläche (221) und mindestens einer Außenfläche (222) umfasst, die Befestigungsvorrichtung (100) aufweisend einen den Libellenkörper (210) aufnehmenden Libellenhalter (110), der in das Hohlprofil (220) der Wasserwaage (200) einschnappbar oder auf sonstige Weise darin befestigbar ist,
**dadurch gekennzeichnet, dass**
die Befestigungsvorrichtung (100) als separate Bauteile ausgebildete Befestigungskeile (120) umfasst, die in einer Einbaustellung derart zwischen dem Libellenkörper (210) und dem Libellenhalter (110) angeordnet sind, dass der Libellenkörper (210) indirekt oder mittelbar über die Befestigungskeile (120) mit dem Libellenhalter (110) ultraschallverschweißbar ist, wobei der Libellenkörper (210) mit den Befestigungskeilen (120) und/oder die Befestigungskeile (120) mit dem Libellenhalter (110) ultraschallverschweißbar sind.

2. Befestigungsvorrichtung (100) nach Anspruch 1,
**dadurch gekennzeichnet, dass**
der Libellenkörper (210) und der Libellenhalter (110) jeweilige, in der Einbaustellung einander gegenüberliegende Anlageflächen (211, 111) aufweisen, und die Befestigungskeile (120) in der Einbaustellung zwischen den einander gegenüberliegenden Anlageflächen (211, 111) angeordnet sind.

3. Befestigungsvorrichtung (100) nach Anspruch 2,
**dadurch gekennzeichnet, dass**
die Befestigungskeile (120) den einander gegenüberliegenden Anlageflächen (211, 111) entsprechende Schweißflächen (121) aufweisen, die in der Einbaustellung an den jeweiligen Anlageflächen (211, 111) anliegen und mit diesen ultraschallverschweißbar sind.

4. Befestigungsvorrichtung (100) nach einem der Ansprüche 2 oder 3,
**dadurch gekennzeichnet, dass**
die Befestigungskeile (120) mit zwischen dem Libellenkörper (210) und den Befestigungskeilen (120) und/oder zwischen dem Libellenhalter (110) und den Befestigungskeilen (120) jeweilige Schweißzonen definierenden Richtungsgebern (122) versehen sind.

5. Befestigungsvorrichtung (100) nach einem der vorhergehenden Ansprüche, **dadurch gekennzeichnet, dass**
der Befestigungskeil (120) mindestens eine Deckfläche (123) aufweist, die vertikal zu den in der Einbaustellung einander gegenüberliegenden Anlageflächen (211, 111) des Libellenkörpers (210) und des Libellenhalters (110) und/oder vertikal zu den Schweißflächen (121) der Befestigungskeile (120) ausgerichtet und zur Anlage an die Arbeitsfläche einer Sonotrode eines Ultraschallschweißgerätes eben ausgebildet ist.

6. Befestigungsvorrichtung (100) nach einem der vorhergehenden Ansprüche,
**dadurch gekennzeichnet, dass**
die Befestigungskeile (120) keilartig, insbesondere mit von der Außenfläche (222) des Hohlprofils (220) der Wasserwaage (200) und/oder der Deckfläche (123) der Befestigungsvorrichtung (100) in Richtung des Inneren der Wasserwaage (200) abnehmender Materialstärke der Schweißflächen (121) ausgebildet sind.

7. Befestigungsvorrichtung (100) nach einem der vorhergehenden Ansprüche,
**dadurch gekennzeichnet, dass**
die Anlageflächen (111) des Libellenhalters (110) an federnd gelagerten Flügelelementen (112) ausgebildet sind, welche Flügelelemente (112) in der Einbaustellung mittels der Befestigungskeile (120) in das Hohlprofil (220) der Wasserwaage (200) einschnappend fixierbar sind.

8. Wasserwaage (200) mit einem Hohlprofil (220), einem Libellenkörper (210) und einer Befestigungsvorrichtung (100) mit einem Libellenhalter (110) und Befestigungskeilen (120) nach einem der vorhergehenden Ansprüche,
**dadurch gekennzeichnet, dass**
der Libellenhalter (110) in das Hohlprofil (220) der Wasserwaage (200) eingeschnappt oder auf sonstige Weise darin befestigt ist und die Befestigungskeile (120) zwischen dem Libellenkörper (210) und dem Libellenhalter (110) angeordnet sind, wobei der Libellenkörper (210) mit den Befestigungskeilen (120) und/oder die Befestigungskeile (120) mit dem Libellenhalter (110) ultraschallverschweißt sind.

9. Verfahren zur Herstellung einer Wasserwaage (200), die ein Hohlprofil (220) mit mindestens einer an die zu vermessende Oberfläche anzulegenden Messfläche (221) und mindestens einer Außenfläche (222), einen Libellenkörper (210) sowie einen Libellenhalter (110) aufweist, wobei
- der Libellenhalter (110) in das Hohlprofil (220) der Wasserwaage (200) eingeschnappt oder auf sonstige Weise darin befestigt wird und
- der Libellenkörper (210) in den Libellenhalter (110) eingesetzt wird,
**dadurch gekennzeichnet, dass**
- zwischen dem Libellenkörper (210) und dem Libellenhalter (110) als separate Bauteile ausgebildete Befestigungskeile (120) platziert werden und
- anschließend der Libellenkörper (210) mit den Befestigungskeilen (120) und/oder die Befestigungskeile (120) mit dem Libellenhalter (110) ultraschallverschweißt werden.

10. Herstellungsverfahren nach Anspruch 9
**dadurch gekennzeichnet, dass**
jeweilige, einander gegenüberliegende Anlageflächen (211, 111) des Libellenkörpers (210) und/oder des Libellenhalters (110) mit komplementär dazu ausgerichteten Schweißflächen (121) der dazwischenliegend platzierten Befestigungskeile (120) ultraschallverschweißt werden, wobei die Arbeitsfläche einer Sonotrode eines Ultraschallschweißgerätes parallel an einer Außenfläche (222) des Hohlprofils (220) und/oder parallel an einer Deckfläche (123) der Befestigungskeile (120) anliegt, welche Außenfläche (222) und/oder Deckfläche (123) vertikal zu den einander gegenüberliegende Anlageflächen (211, 111) und den Schweißflächen (121) verläuft.

## Claims

1. Device (100) for fastening the level element (210) of a spirit level (200), wherein the spirit level (200) comprises a hollow profile (220) with at least one measuring surface (221) to be put on the surface to be measured and at least one outer surface (222), the fastening device (100) having a level holder (110) accommodating the level element (210), which holder can be snapped in place in the hollow profile (220) of the spirit level (200) or fastened therein in another way,
**characterised in that**
the fastening device (100) comprises fastening wedges (120) designed as separate components, which wedges, in a mounting position, are arranged between the level element (210) and the level holder (110) such that the level element (210) can be ultrasonically welded to the level holder (110), indirectly or obliquely, via the fastening wedges (120), wherein the level element (210) can be ultrasonically welded to the fastening wedges (120) and/or the fastening wedges (120) can be ultrasonically welded to the level holder (110).

2. Fastening device (100) according to claim 1,
**characterised in that**
the level element (210) and the level holder (110) have respective bearing surfaces (211, 111) opposite one another in the mounting position and, in the mounting position, the fastening wedges (120) are arranged between the opposing bearing surfaces (211, 111).

3. Fastening device (100) according to claim 2,
**characterised in that**
the fastening wedges (120) have weld contact areas (121) corresponding to the opposing bearing surfaces (211, 111), which weld contact areas abut against the respective bearing surfaces (211, 111) in the mounting position, and can be ultrasonically welded thereto.

4. Fastening device (100) according to one of claims 2 or 3,
**characterised in that**
the fastening wedges (120) are provided with energy directors (122) defining respective weld zones between the level element (210) and the fastening wedges (120) and/or between the level holder (110) and the fastening wedges (120).

5. Fastening device (100) according to one of the preceding claims,
**characterised in that**
the fastening wedge (120) has at least one cover surface (123) which is aligned vertically to the bearing surfaces (211, 111) of the level element (210) and of the level holder (110) opposite one another in the mounting position and/or vertically to the weld contact areas (121) of the fastening wedges (120), and is designed to abut in planar manner against the working surface of a sonotrode of an ultrasonic welding device.

6. Fastening device (100) according to one of the preceding claims,
**characterised in that**
the fastening wedges (120) are designed wedge-shaped, in particular with the material thickness of the weld contact areas (121) decreasing from the outer surface (222) of the hollow profile (220) of the spirit level (200) and/or of the cover surface (123) of the fastening device (100) in the direction of the inside of the spirit level (200).

7. Fastening device (100) according to one of the preceding claims,
**characterised in that**
the bearing surfaces (111) of the level holder (110) are formed at wing elements (112) housed in spring-loaded manner, which wing elements (112) can be fixed, snapped into the hollow profile (220) of the spirit level (200), in the mounting position by means of the fastening wedges (120).

8. Spirit level (200) with a hollow profile (220), a level element (210) and a fastening device (100) with a level holder (110) and fastening wedges (120) according to one of the preceding claims,
**characterised in that**
the level holder (110) is snapped into the hollow profile (220) of the spirit level (200) or fastened therein in another way, and the fastening wedges (120) are arranged between the level element (210) and the level holder (110), wherein the level element (210) is ultrasonically welded to the fastening wedges (120) and/or the fastening wedges (120) are ultrasonically welded to the level holder (110).

9. Method for producing a spirit level (200), which has a hollow profile (220) with at least one measuring surface (221) to be put on the surface to be measured, and at least one outer surface (222), a level element (210) and a level holder (110), wherein
- the level holder (110) is snapped into the hollow profile (220) of the spirit level (200) or fastened therein in another way, and
- the level element (210) is inserted into the level holder (110),
**characterised in that**
- fastening wedges (120) designed as separate components are placed between the level element (210) and the level holder (110), and
- subsequently, the level element (210) is ultrasonically welded to the fastening wedges (120) and/or the fastening wedges (120) are ultrasonically welded to the level holder (110).

10. Production method according to claim 9
**characterised in that**
respective opposing bearing surfaces (211, 111) of the level element (210) and/or of the level holder (110) are ultrasonically welded to weld contact areas (121) of the fastening wedges (120) placed lying therebetween, aligned in complementary manner thereto, wherein the working surface of a sonotrode of an ultrasonic device abuts parallel to an outer surface (222) of the hollow profile (220) and/or parallel to a cover surface (123) of the fastening wedges (120), which outer surface (222) and/or cover surface (123) run(s) vertically to the opposing bearing surfaces (211, 111) and the weld contact areas (121).

## Revendications

1. Dispositif (100) permettant de fixer la fiole de niveau (210) d'un niveau à bulle (200), le niveau à bulle (200) comprenant un profilé creux (220) pourvu d'au moins une surface de mesure (221) à appliquer contre la surface à mesurer et d'au moins une surface extérieure (222), le dispositif de fixation (100) présentant un support de fiole (110) recevant la fiole de niveau (210) et qui peut être encliqueté dans le profilé creux (220) du niveau à bulle (200) ou autrement fixé à celui-ci,
**caractérisé en ce que** le dispositif de fixation (100) comprend des clavettes (120) réalisées sous la forme de composants séparés et qui sont dans une position d'installation disposées entre la fiole de niveau (210) et le support de fiole (110) de telle sorte que la fiole de niveau (210) peut être soudée par ultrasons indirectement, ou indirectement par l'intermédiaire des clavettes (120), au support de fiole (110), dans lequel la fiole de niveau (210) peut être soudée par ultrasons aux clavettes (120) et/ou les clavettes (120) peuvent être soudées par ultrasons au support de fiole (110).

2. Dispositif de fixation (100) selon la revendication 1, **caractérisé en ce que** la fiole de niveau (210) et le support de fiole (110) présentent des surfaces d'application (211, 111) respectives, mutuellement opposées dans la position d'installation, et dans la position d'installation, les clavettes (120) sont disposées entre les surfaces d'application (211, 111) mutuellement opposées.

3. Dispositif de fixation (100) selon la revendication 2, **caractérisé en ce que** les clavettes (120) présentent des surfaces de soudage (121) correspondant aux surfaces d'application (211, 111) mutuellement opposées, qui, dans la position d'installation, sont adjacentes aux surfaces d'application (211, 111) respectives et peuvent être soudées par ultrasons à celles-ci.

4. Dispositif de fixation (100) selon l'une quelconque des revendications 2 ou 3, **caractérisé en ce que** les clavettes (120) sont pourvues d'indicateurs de direction (122) définissant des zones de soudage respectives entre la fiole de niveau (210) et les clavettes (120) et/ou entre le support de fiole (110) et les clavettes (120).

5. Dispositif de fixation (100) selon l'une quelconque des revendications précédentes, **caractérisé en ce que** la clavette (120) présente au moins une zone de recouvrement (123) qui est orientée verticalement par rapport aux surfaces d'application (211, 111), mutuellement opposées dans la position d'installation, de la fiole de niveau (210) ou du support de fiole (110), et/ou verticalement par rapport aux surfaces de soudage (121) des clavettes (120), et est réalisée pour s'appliquer contre la surface de travail d'une sonotrode d'un appareil de soudage par ultrasons.

6. Dispositif de fixation (100) selon l'une quelconque des revendications précédentes, **caractérisé en ce que** les clavettes (120) sont réalisées en forme de coin, en particulier avec une épaisseur de matériau des surfaces de soudage (121) diminuant de la surface extérieure (222) du profilé creux (220) du niveau à bulle (200) et/ou de la surface de recouvrement (123) du dispositif de fixation (100) en direction de l'intérieur du niveau à bulle (200).

7. Dispositif de fixation (100) selon l'une quelconque des revendications précédentes, **caractérisé en ce que** les surfaces d'application (111) du support de fiole (110) sont réalisées au niveau d'éléments d'aile (112) montés sur ressort, lesquels éléments d'aile (112) pouvant être fixés par encliquetage dans la position d'installation au moyen des clavettes (120) dans le profilé creux (220) du niveau à bulle (200).

8. Niveau à bulle (200) comprenant un profilé creux (220), une fiole de niveau (210) et un dispositif de fixation (100) pourvu d'un support de fiole (110) et de clavettes (120) selon l'une quelconque des revendications précédentes, **caractérisé en ce que** le support de fiole (110) est encliqueté dans le profilé creux (220) du niveau à bulle (200) ou autrement fixé dans celui-ci, et les clavettes (120) sont disposées entre la fiole de niveau (210) et le support de fiole (110), dans lequel la fiole de niveau (210) est soudée par ultrasons aux clavettes (120) et/ou les clavettes (120) sont soudées par ultrasons au support de fiole (110).

9. Procédé de fabrication d'un niveau à bulle (200) présentant un profilé creux (220) pourvu d'au moins une surface de mesure (221) à appliquer contre une surface à mesurer et d'au moins une surface extérieure (222), une fiole de niveau (210) ainsi qu'un support de fiole (110), dans lequel
- le support de fiole (110) est encliqueté dans le profilé creux (220) du niveau à bulle (200) ou autrement fixé dans celui-ci, et
- la fiole de niveau (210) est insérée dans le support de fiole (110),
**caractérisé en ce que**
- des clavettes (120) réalisées sous la forme de composants séparés sont placées entre la fiole de niveau (210) et le support de fiole (110), et
- ensuite, la fiole de niveau (210) est soudée par ultrasons aux clavettes (120) et/ou les clavettes (120) sont soudées par ultrasons au support de fiole (110).

10. Procédé de fabrication selon la revendication 9, **caractérisé en ce que** des surfaces d'application (211, 111) respectives, mutuellement opposées, de la fiole de niveau (210) et/ou du support de fiole (110) sont soudées par ultrasons à des surfaces de soudage (121), orientées de manière complémentaire à celles-ci, des clavettes (120) placées entre celles-ci,
dans lequel la surface de travail d'une sonotrode d'un appareil de soudage par ultrasons est adjacente en parallèle à une surface extérieure (222) du profilé creux (220) et/ou en parallèle à une surface de recouvrement (123) de la clavette (120), laquelle surface extérieure (222) et/ou laquelle surface de recouvrement (123) s'étend(ent) verticalement par rapport aux surfaces d'application (211, 111) mutuellement opposées et aux surfaces de soudage (121).
